# EUROPÄISCHE PATENTANMELDUNG

(11) **EP 4 412 012 A1**
(43) Veröffentlichungstag der Anmeldung: **07.08.2024**
(21) Anmeldenummer: 23307411.1
(22) Anmeldetag: 28.12.2023
(51) Int. Cl.: H02B 13/045

(54) **DRUCKBEHÄLTER**

(30) Priorität: 31.01.2023 DE 102023102362
(71) Anmelder: Schneider Electric Industries SAS, 92500 Rueil-Malmaison (FR)
(72) Erfinder: NOTIN, Alban, 93086 Wörth an der Donau (DE); HUMBS, Tobias, 93170 Bernhardswald (DE); NAIR, Arun, 93049 Regensburg (DE); NAMALA, Satish, 560049 Bangalore, Karnataka (IN)
(74) Vertreter: Manitz Finsterwald Patent- und Rechtsanwaltspartnerschaft mbB

(57) **Zusammenfassung**

Die Erfindung betrifft einen gasdichten Druckbehälter für ein Schaltfeld der elektrischen Energietechnik, insbesondere der Mittelspannungstechnik, mit zumindest einem an einer Außenseite des Druckbehälters befestigten Versteifungselement.

## Beschreibung

Die Erfindung betrifft einen gasdichten Druckbehälter für ein Schaltfeld der elektrischen Energietechnik, insbesondere der Mittelspannungstechnik, mit zumindest einem an einer Außenseite des Druckbehälters befestigten Versteifungselement.

Elektrische Energie wird üblicherweise mittels Schaltanlagen verteilt. Eine Schaltanlage umfasst typischerweise einzelne Schaltfelder, die zumeist über gemeinsame Sammelschienen verbunden sind. Dabei können die einzelnen Schaltfelder gasdichte Druckbehälter umfassen, in denen Komponenten wie Leistungsschalter, Sammelschienenabschnitte oder Strom- und Spannungsmessgeräte des jeweiligen Schaltfelds angeordnet sind. Üblicherweise werden mehrere solcher Schaltfelder dicht nebeneinander in einer Reihe installiert. Zu Wartungszwecken kann es erforderlich sein, das entsprechende Schaltfeld nach Freischaltung aus der Reihe herauszuziehen und nach Reparatur oder Austausch wieder in die entstandene Lücke einzuschieben.

Druckbehälter wurden bislang beispielsweise mit Schwefelhexafluorid als Isoliergas befüllt, um die Spannungsfestigkeit des Schaltfeldes zu erhöhen. Schwefelhexafluorid besitzt jedoch neben einer hohen elektrischen Festigkeit ein hohes Treibhauspotential, weshalb verstärkt alternative Isoliergase eingesetzt werden. Allerdings weisen diese gegenüber Schwefelhexafluorid häufig eine geringere elektrische Festigkeit auf, weshalb derartige alternative Isoliergase gegenüber Schwefelhexafluorid bei höheren Drücken eingesetzt werden müssen.

Grundsätzlich kann ein Druckbehälter, unabhängig von dem jeweiligen Isoliergas, nur begrenzt einer Deformation auf Grund des innenseitigen Drucks standhalten.

Kommt es zu einer Deformation, können an einem Druckbehälter angeordnete Komponenten, wie zum Beispiel Durchführungen, beschädigt werden. Insbesondere ist ein Ausbeulen bzw. Durchbiegen von Druckbehältern im Bereich von Sammelschienendurchführungen zu verhindern, da diese gewöhnlich ein starres Kunststoffmaterial umfassen, das bei einer Biegebeanspruchung beschädigt werden kann. Um ein Ausbeulen zu verhindern ist es daher üblich, Druckbehälter mit an diesen befestigten Versteifungselementen zu verstärken.

Der Erfindung liegt die Aufgabe zugrunde, einen Druckbehälter mit einer erhöhten mechanischen Festigkeit zu schaffen, wobei der Einbau und der Ausbau des Druckbehälter vereinfacht ist.

Diese Aufgabe wird durch einen Druckbehälter mit den Merkmalen des Anspruchs 1 gelöst.

Der Erfindung liegt dabei die Idee zugrunde, parallel beabstandete Außenseiten benachbarter Druckbehälter dadurch zu versteifen, dass das Versteifungselement einerseits an der Außenseite eines Druckbehälters befestigt ist, und andererseits, wenn das Versteifungselement austeleskopiert ist, an einer Anlagefläche der Außenseite eines benachbarten Druckbehälters anliegen kann.

Beim Einbau kann ein Schaltfeld mit einem erfindungsgemäßen Druckbehälter mit einteleskopiertem Versteifungselement in eine Lücke zwischen zwei benachbarten Schaltfeldern, d.h. neben einem benachbarten Druckbehälter eingeschoben werden. Dies kann dabei besonders einfach erfolgen, weil das einteleskopierte Versteifungselement zu der Außenwand des benachbarten Druckbehälters etwas beabstandet ist. Anschließend kann das Versteifungselement austeleskopiert und arretiert werden. In diesem zwischen den beiden Außenseiten eingespreizten Zustand kann das Versteifungselement aufgrund der Arretierung nicht einteleskopiert werden, wodurch beide benachbarten Druckbehälter gegeneinander versteift sind.

Es kann jedoch auch das einteleskopierte Versteifungselement schon zu einer Versteifung des erfindungsgemäßen Druckbehälters beitragen.

Durch den erfindungsgemäßen Druckbehälter vereinfacht sich der Einbau und der Ausbau des benachbarten Druckbehälters: Für den Einbau und den Ausbau des benachbarten Druckbehälters wird das Versteifungselement des erfindungsgemä-ßen Druckbehälters einteleskopiert. Da auf Grund des Versteifungselements des erfindungsgemäßen Druckbehälters an der Anlagefläche des benachbarten Druckbehälters zu dessen Versteifung kein eigenes Versteifungselement, beispielsweise in Form von Verstrebungen, vorgesehen sein muss, welches sonst über den benachbarten Druckbehälter hinaus stünde, kann der benachbarte Druckbehälter besonders einfach eingeschoben und herausgezogen werden.

Gleiches gilt auch im Falle benachbarter erfindungsgemäßer Druckbehälter.

Ein weiterer Vorteil liegt darin, dass das Versteifungselement außerhalb des erfindungsgemäßen Druckbehälters befestigt ist. Grundsätzlich wäre es auch denkbar, einen Druckbehälter in seinem Inneren mit Versteifungselementen zu versehen. Da der erfindungsgemäße Druckbehälter aber außerhalb versteift ist, steht in seinem Inneren mehr Raum für das jeweilige Isoliergas zur Verfügung, wodurch die Spannungsfestigkeit eines Schaltfelds mit dem erfindungsgemäßen Druckbehälter erhöht ist.

Vorteilhafte Ausgestaltungen der Erfindung ergeben sich aus den Unteransprüchen, der Beschreibung und den Figuren.

Nach einer ersten vorteilhaften Ausführungsform kann das Versteifungselement zumindest eine Kulissenführung und zumindest einen Riegel umfassen, der in der Kulissenführung angeordnet ist. Dabei ist die Bewegung des Versteifungselements beim Teleskopieren und Arretieren durch den Verlauf der Kulissenführung vorgegeben. Hierdurch wird das Versteifungselement auf besonders einfache Weise teleskopierbar und arretierbar ausgebildet und eine kompakte und platzsparende Anordnung ist erreicht, wodurch der Einbau und der Ausbau des Druckbehälters vereinfacht ist.

Nach einer weiteren vorteilhaften Ausführungsform kann die Kulissenführung einen Teleskopierabschnitt, in dem der Riegel beim Teleskopieren angeordnet ist, sowie zumindest einen Arretierabschnitt umfassen, in dem der Riegel beim Arretieren angeordnet ist, wobei der Riegel und der Arretierabschnitt lösbar miteinander verrastbar sind. Dadurch kann das Versteifungselement besonders einfach je nach Position des Riegels in der Kulissenführung arretiert werden, ohne dass hierzu beispielsweise separate Arretierelemente in das Versteifungselement eingeführt werden müssen. Die Arretierung wird also einfach durch die Formgebung der Kulissenführung erreicht. Vorteilhafterweise verrastet der Riegel dann mit dem Arretierabschnitt, wenn das Versteifungselement austeleskopiert ist. Das Versteifungselement kann dann nicht mehr einteleskopiert werden und sorgt für eine zuverlässige Versteifung.

Nach einer weiteren vorteilhaften Ausführungsform kann die Kulissenführung eine U-förmige Aussparung aufweisen, wobei zwei parallele Abschnitte der Aussparung einen ersten Arretierabschnitt und einen zweiten Arretierabschnitt ausbilden, die über den Teleskopierabschnitt miteinander verbunden sind. Auf diese Weise kann das Versteifungselement besonders einfach in zwei Zuständen arretiert werden, nämlich wenn es austeleskopiert oder einteleskopiert ist. Insbesondere für Transport- oder Wartungszwecke ist es vorteilhaft, das Versteifungselement auch dann zu arretieren, wenn es einteleskopiert ist, sodass auch diese Ausführungsform den Einbau und den Ausbau des Druckbehälters vereinfacht. Darüber hinaus erlaubt diese Ausführung der Kulissenführung eine besonders zuverlässige Versteifung, da die Wandung der Kulissenführung in den Arretierabschnitten senkrecht zu einer Krafteinleitung des Riegels orientiert ist.

Nach einer weiteren vorteilhaften Ausführungsform kann die Kulissenführung in einer zu der Außenseite senkrechten Ebene ausgebildet sein, wobei der Riegel parallel zu der Außenseite in der Kulissenführung angeordnet ist. Durch diese Orientierung wird eine besonders gleichmäßige Krafteinleitung in das Versteifungselement sowie eine zuverlässige Versteifung erreicht. Darüber hinaus ist das Versteifungselement besonders kompakt und platzsparend.

Nach einer weiteren vorteilhaften Ausführungsform kann das Versteifungselement mehrere parallel zueinander beabstandete Rippen und/oder Rippenpaare umfassen. Hierdurch ist ein in sich steifer und zugleich kompakter Aufbau des Versteifungselements in Rippenbauweise erreicht.

Nach einer weiteren vorteilhaften Ausführungsform kann jedes Rippenpaar zumindest eine feststehende Rippe umfassen, die senkrecht zu der Außenseite orientiert und an dieser befestigt ist, sowie zumindest eine relativ zu der feststehenden Rippe verschiebbare Rippe, die insbesondere an der feststehenden Rippe anliegt. Alternativ wären beispielsweise je Rippenpaar auch zwei verschiebbare Rippen und eine feststehende Rippe denkbar, wobei die verschiebbaren Rippen beiderseits der feststehenden Rippe angeordnet sein könnten. Durch die senkrechte Orientierung wird eine besonders gleichmäßige Krafteinleitung in das Versteifungselement sowie eine zuverlässige Versteifung erreicht. Zudem ist das Versteifungselement besonders kompakt und platzsparend. Insbesondere können, wenn die verschiebbare Rippe an der feststehenden Rippe anliegt, Scherkräfte reduziert werden.

Nach einer weiteren vorteilhaften Ausführungsform kann zumindest eine Rippe des Versteifungselements eine Kulissenführung aufweisen, in der ein Riegel angeordnet ist. Bei der Rippe handelt es sich dabei insbesondere um eine Rippe eines der vorstehend beschriebenen Rippenpaare. Die Kulissenführung kann ebenfalls wie eine der vorstehend beschrieben Kulissenführungen ausgeführt sein.

Nach einer weiteren vorteilhaften Ausführungsform kann zumindest eine Rippe des Versteifungselements eine Öffnung aufweisen, in der ein Riegel formschlüssig und/oder kraftschlüssig aufgenommen ist. Bei der Rippe kann es sich dabei um die Rippe der vorherigen Ausführungsform - diese würde folglich die Kulissenführung und die Öffnung aufweisen - oder um eine andere Rippe eines der vorstehend beschriebenen Rippenpaare handeln. Ebenso kann es sich bei dem Riegel dieser Ausführungsform um den Riegel der vorherigen Ausführungsform oder um einen anderen Riegel handeln.

Nach einer weiteren vorteilhaften Ausführungsform kann zumindest eine feststehende Rippe zumindest eines Rippenpaares eine Kulissenführung aufweisen, in der ein Riegel angeordnet ist, wobei zumindest eine verschiebbare Rippe des Rippenpaares eine Öffnung aufweist, in der der Riegel formschlüssig und/oder kraftschlüssig aufgenommen ist. Die Kulissenführung kann dabei gemäß den vorstehend beschrieben Kulissenführungen ausgeführt sein. Über den Riegel und die Kulissenführung ist die verschiebbare Rippe relativ zu der feststehenden Rippe entsprechend dem Verlauf der Kulissenführung verschiebbar und platzsparend geführt. Wird das Versteifungselement teleskopiert, wird der Riegel in der Kulissenführung verschoben.

Nach einer weiteren vorteilhaften Ausführungsform kann zumindest eine verschiebbare Rippe zumindest eines Rippenpaares eine Kulissenführung aufweisen, in der ein Riegel angeordnet ist, wobei zumindest eine feststehende Rippe des Rippenpaares eine Öffnung aufweist, in der der Riegel formschlüssig und/oder kraftschlüssig aufgenommen ist. Die Kulissenführung kann dabei gemäß den vorstehend beschrieben Kulissenführungen ausgeführt sein. Über die Kulissenführung und den Riegel ist die verschiebbare Rippe relativ zu der feststehenden Rippe entsprechend dem Verlauf der Kulissenführung verschiebbar und platzsparend geführt. Wird das Versteifungselement teleskopiert, wird die Kulissenführung an dem Riegel verschoben. Insbesondere wenn es sich bei der verschiebbaren Rippe und der feststehenden Rippe dieser Ausführungsform um die jeweilige verschiebbare und feststehende Rippe der vorherigen Ausführungsform handelt, können die Kulissenführung und die Öffnung der verschiebbaren Rippe und der feststehenden Rippe gleich ausgebildet sein. In diesem Fall kann es sich bei beiden Rippen um gleiche Bauteile handeln, wodurch auch die Herstellung des Versteifungselements vereinfacht ist.

Nach einer weiteren vorteilhaften Ausführungsform kann das Versteifungselement ein feststehendes Profilteil mit zumindest einer Sicke umfassen, das an der Außenseite befestigt ist und an dem die feststehenden Rippen befestigt sind, wobei die Außenkonturen der feststehenden Rippen an die Querschnittsform des feststehenden Profilteils angepasst sind. Über das feststehende Profilteil ist das Versteifungselement auf einfache Weise an der Außenseite des Druckbehälters befestigt, insbesondere angeschweißt. Außerdem wirkt das feststehende Profilteil dabei zusätzlich versteifend und es erfolgt eine zuverlässige und gleichmäßige Krafteinleitung in das Versteifungselement.

Nach einer weiteren vorteilhaften Ausführungsform kann zwischen dem feststehenden Profilteil und der Außenseite und/oder zwischen dem feststehenden Profilteil und allen feststehenden Rippen zumindest ein Durchlass ausgebildet sein, der dazu vorgesehen ist, ein Funktionsbauteil des Schaltfelds durch den Durchlass des Versteifungselements hindurchführen zu können. Ein solcher Durchlass kann beispielsweise durch die Sicke des feststehenden Profilteils und/oder eine Ausnehmung an allen feststehenden Rippen ausgebildet sein.

Nach einer weiteren vorteilhaften Ausführungsform kann das Versteifungselement ein verschiebbares Profilteil mit zumindest einer Sicke umfassen, das an den verschiebbaren Rippen befestigt, insbesondere angeschweißt, ist, wobei die Außenkonturen der verschiebbaren Rippen an die Querschnittsform des verschiebbaren Profilteils angepasst sind. Über das verschiebbare Profilteil kann das Versteifungselement auf einfache Weise an einer zu der Außenseite parallel beabstandeten Außenseite eines um einen Abstand D benachbart angeordneten zweiten Druckbehälters befestigt, insbesondere angeschraubt, werden. Hierdurch ist der Einbau und der Ausbau des erfindungsgemäßen Druckbehälters sowie des benachbarten zweiten Druckbehälters erheblich vereinfacht, da lediglich die Befestigung des verschiebbaren Profilteils gelöst werden muss, danach kann das Versteifungselement teleskopiert werden. Das verschiebbare Profilteil wirkt zusätzlich zu der Rippenanordnung versteifend und sorgt für eine zuverlässige und gleichmäßige Krafteinleitung in das Versteifungselement. Alternativ können die verschiebbaren Rippen beispielsweise direkt mit der benachbarten Außenseite bzw. einer daran befestigen Montageplatte in Kontakt treten.

Nach einer weiteren vorteilhaften Ausführungsform kann der Riegel als Stange oder Bolzen ausgeführt sein, der sich in einer axialen Richtung erstreckt, wobei die Enden des Riegels jeweils mit einer Sicherungseinrichtung, insbesondere einer Mutter und/oder einem Splint versehen sein können, wodurch der Riegel gegen eine axiale Bewegung gesichert ist. Die Stange ist vorteilhafterweise durch alle beteiligten Rippen geführt, wodurch das Versteifungselement besonders einfach, kompakt und platzsparend ausgebildet ist. Zudem erfolgt auf Grund der durchgeführten Stange eine gleichmäßige Krafteinleitung in das Versteifungselement. Wären beispielsweise lediglich einzelne Verschraubungen vorgesehen, die die Rippen der einzelnen Rippenpaare miteinander verbinden, würde hingegen eine weniger gleichmäßige Krafteinleitung erfolgen.

Nach einer weiteren vorteilhaften Ausführungsform kann das Versteifungselement zumindest drei Bauteilsätze mit verschiedenen Bauteilen umfassen, wobei jeder der drei Bauteilsätze zumindest zwei gleiche Bauteile, insbesondere mit identischer Form, enthält. Dabei können beispielsweise alle Riegel, alle Rippen und alle Profilteile des Versteifungselements jeweils einen Bauteilsatz darstellen. Insbesondere können alle Riegel und/oder alle Rippen und/oder alle Profilteile des Versteifungselements jeweils eine identische Form aufweisen. Dadurch wird die Anzahl der verschiedenen Bauteile des Versteifungselements reduziert, wodurch die Herstellung einfacher und kostengünstiger wird.

Nach einer weiteren vorteilhaften Ausführungsform kann der Druckbehälter einen Kabelanschlussraum, einen Sammelschienenraum und einen Leistungsschalterraum aufweisen.

Ferner betrifft die Erfindung eine Anordnung aus einem ersten erfindungsgemä-ßen Druckbehälter und einem um einen Abstand D benachbart dazu angeordneten zweiten Druckbehälter, an dessen zu der Außenseite des ersten Druckbehälters parallel beabstandeten und gegenüberliegenden Außenseite eine Montageplatte befestigt ist, an der das Versteifungselement des ersten Druckbehälters montiert ist.

Darüber hinaus betrifft die Erfindung ein Schaltfeld der elektrischen Energietechnik, insbesondere der Mittelspannungstechnik, mit einem erfindungsgemäßen Druckbehälter.

Des Weiteren betrifft die Erfindung eine Anordnung aus einem ersten Schaltfeld mit einem erfindungsgemäßen Druckbehälter und einem um einen Abstand D benachbart dazu angeordneten zweiten Schaltfeld mit einem zweiten Druckbehälter, an dessen zu der Außenseite des Druckbehälters des ersten Schaltfelds parallel beabstandeten und gegenüberliegenden Außenseite eine Montageplatte befestigt ist, an der das Versteifungselement des ersten Druckbehälters montiert ist.

Bei einer Weiterbildung der vorstehenden Anordnung zweier benachbarter Druckbehälter mit einem erfindungsgemäßen Druckbehälter und einem zweiten Druckbehälter kann zumindest ein separat ausgebildetes, an den Außenseiten der Druckbehälter anliegendes Schwert mit einem Eingriffsvorsprung vorgesehen sein, der in das Versteifungselement eingreift, wodurch das Schwert das Versteifungselement zusätzlich blockiert.

Außerdem betrifft die Erfindung ein Verfahren zur Versteifung eines erfindungsgemäßen Druckbehälters, der in einem Schaltfeld angeordnet ist, wobei das Schaltfeld parallel beabstandet zu einem benachbarten zweiten Schaltfeld mit einem zweiten Druckbehälter angeordnet ist, umfassend die folgenden Schritte: Überführen des Versteifungselements in den austeleskopierten Zustand, Arretieren des Versteifungselements, und Befestigen des Versteifungselements an dem zweiten Druckbehälter.

Die Erfindung wird im Folgenden beispielhaft unter Bezugnahme auf die Figuren beschrieben. Es zeigt schematisch:
- Fig. 1: eine Anordnung aus einem erfindungsgemäßen Druckbehälter mit einem benachbarten Druckbehälter,
- Fig. 2: das Versteifungselement aus Fig. 1 in einer Detailansicht,
- Fig. 3: eine Detailansicht einer der Rippen des Versteifungselements aus Fig. 2,
- Fig. 4: eine Detailansicht einer Anordnung aus einem erfindungsgemäßen Druckbehälter mit einem benachbarten Druckbehälter, wobei das Versteifungselement einteleskopiert oder austeleskopiert ist,
- Fig. 5: eine Detailansicht einer Anordnung aus einem erfindungsgemäßen Druckbehälter mit einem benachbarten Druckbehälter, wobei ein Funktionsbauteil durch das Versteifungselement geführt ist, und
- Fig. 6: eine Detailansicht einer Anordnung aus einem erfindungsgemäßen Druckbehälter mit einem benachbarten Druckbehälter, wobei Schwerter zwischen den Druckbehälter eingeführt sind.

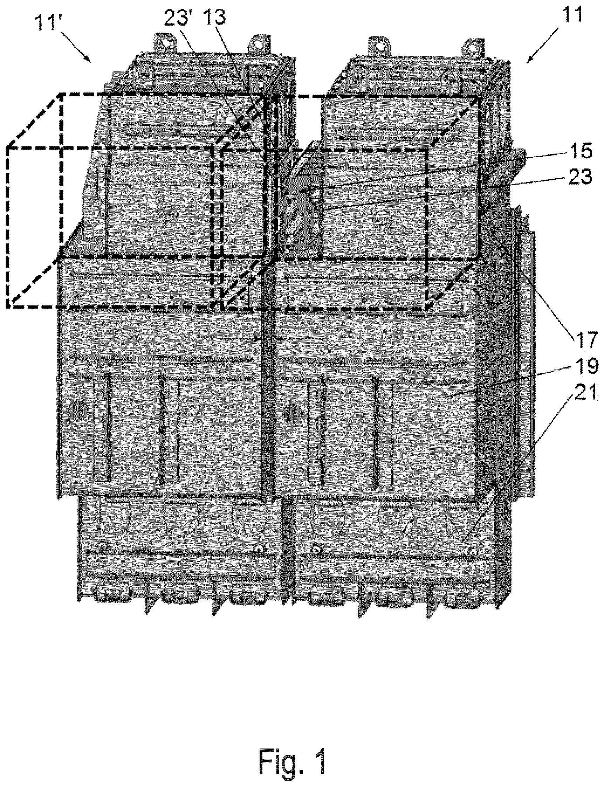

Fig. 1 zeigt eine Anordnung aus einem ersten erfindungsgemäßen Druckbehälter 11 und einem um einen Abstand D benachbart dazu angeordneten zweiten Druckbehälter 11' als ein mögliches Ausführungsbeispiel der Erfindung. Der Druckbehälter 11 umfasst einen Kabelanschlussraum 21, um ein Schaltfeld mit dem Druckbehälter an ein Energienetz anzuschließen, einen Sammelschienenraum 17, um die Energie einer angeschlossenen Phase zu verteilen, und einen Leistungsschalterraum 19, um eine angeschlossene Phase wahlweise mit einer Sammelschiene zu verbinden oder von dieser zu trennen. An einer Außenseite 23 des Druckbehälter 11 ist ein Versteifungselement 15 befestigt, das senkrecht zu der Außenseite 23 teleskopierbar und arretierbar ist, wobei das Versteifungselement 15 in Fig. 1 einteleskopiert ist. An der zu der Außenseite 23 des ersten Druckbehälters 11 parallel beabstandeten und gegenüberliegenden Außenseite 23' des Druckbehälters 11' ist eine Montageplatte 13 befestigt, die zu ihrer Versteifung mehrere Aussparungen aufweisen kann. Wenn das Versteifungselement 15 austeleskopiert ist, kann das Versteifungselement 15 des ersten Druckbehälters 11 an der Montageplatte 13 befestigt, insbesondere angeschraubt werden, um den Druckbehälter 11 und den zweiten Druckbehälter 11' gegeneinander zu versteifen.

Der Druckbehälter 11 und der zweite Druckbehälter 11' werden üblicherweise mit einem Niederspannungsschrank versehen, der einen Bestandteil eines Schaltfelds bildet. Die typische Außenkontur des jeweiligen Niederspannungsschranks ist in Fig. 1 durch die strichlierten Kästen auf Höhe des Sammelschienenraums 17 illustriert.

Hierbei ist erkennbar, dass der dem Abstand D entsprechende Freiraum außerordentlich gering ist, so dass ein Versteifungselement, das anstelle der Montageplatte 13 angebracht wäre und über den Druckbehälter 11' weiter hinaus stünde, beim Herausziehen (aus der Zeichenebene hinaus) oder Einschieben (in die Zeichenebene hinein) des zweiten Druckbehälters 11' an dem Niederspannungsschrank des Druckbehälters 11 anstoßen würde. Andererseits könnte ein an dem Druckbehälter 11 anstelle des Versteifungselements 15 befestigtes gewöhnliches Versteifungselement ebenfalls ein Herausziehen oder Einschieben des Druckbehälters 11 oder des Druckbehälter 11' erschweren, da dieses verkanten könnte und daher aufwendig rückgebaut werden müsste. Da das Versteifungselement 15 jedoch teleskopierbar ist und, wenn es einteleskopiert ist, nicht über den Druckbehälter 11 hinaussteht, kann sowohl der Druckbehälter 11, als auch der Druckbehälter 11' herausgezogen oder eingeschoben werden, ohne dass das Versteifungselement 15 dabei verkantet. Selbstverständlich kann das Versteifungselement 15 auch an anderen Stellen des erfindungsgemäßen Druckbehälters 11 befestigt sein.

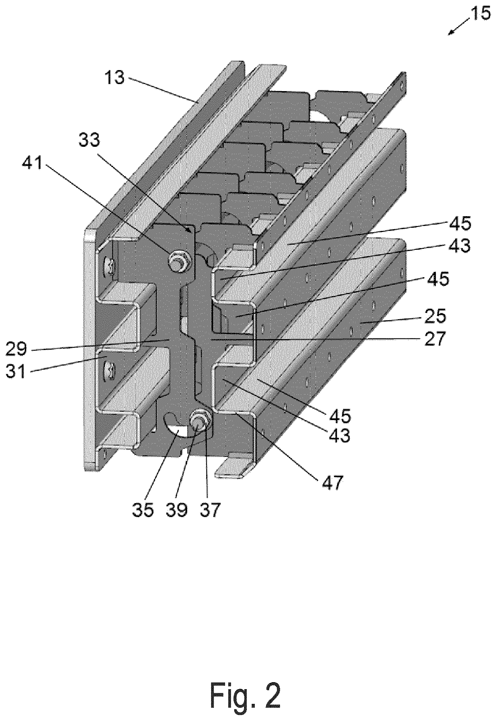

In Fig. 2 ist das Versteifungselement 15 aus Fig. 1 in einer Detailansicht dargestellt. Das Versteifungselement 15 umfasst dabei ein feststehendes Profilteil 25, mit welchem das Versteifungselement 15 an der Außenseite 23 des Druckbehälters 11 angeschweißt ist. Des Weiteren umfasst das Versteifungselement 15 der beispielhaften Ausführungsform sechs gleiche und parallel zueinander beabstandete Rippenpaare 33. Jedes Rippenpaar 33 weist eine feststehende Rippe 27 und eine verschiebbare Rippe 29 auf, die an der feststehenden Rippe 27 anliegt und relativ zu dieser verschiebbar ist. Jede feststehende Rippe 27 ist an dem feststehenden Profilteil 25 angeschweißt, außerdem ist ein verschiebbares Profilteil 31 an jeder verschiebbare Rippe 29 angeschweißt. In Fig. 2 ist das Versteifungselement 15 austeleskopiert, arretiert und das verschiebbare Profilteil 31 an der Montageplatte 13 angeschraubt.

Jede Rippe 27, 29 weist eine Kulissenführung 35 und eine Öffnung 41 (in Fig. 2 nicht erkennbar) auf. Sowohl die Rippen 27, 29, als auch die Kulissenführungen 35 sind jeweils in einer zu der Außenseite 23 senkrechten Ebene ausgebildet, wobei es sich bei allen Rippen 27, 29 um gleiche Bauteile handelt. Auch kann es sich bei dem feststehenden Profilteil 25 und dem verschiebbaren Profilteil 31 um zwei gleiche Bauteile handeln. Die Rippen 27, 29 jedes Rippenpaares 33 sind dabei so orientiert, dass jeweils ein Riegel 39 in Form einer Stange durch die Kulissenführung 35 der einen Rippe 27, 29 eines jeden Rippenpaares 33 und die Öffnung 41 der anderen Rippe 29, 27 des jeweiligen Rippenpaares 33 gesteckt werden kann, wobei es sich bei den beiden Riegeln 39 um zwei gleiche Bauteile handeln kann. Ferner sind die beiden Riegel 39 jeweils parallel zu der Außenseite 23 in den jeweiligen Kulissenführungen 35 angeordnet. Jeder Riegel 39 ist dabei in den jeweiligen Öffnungen 41 formschlüssig aufgenommen, sodass die verschiebbaren Rippen 29 zusammen mit dem verschiebbaren Profilteil 31 entlang des durch den Verlauf der Kulissenführungen 35 vorgegebenen Weges relativ zu den feststehenden Rippen 27 verschoben werden können. Zusätzlich sind die Enden des jeweiligen Riegels 39 jeweils mit einer Sicherungseinrichtung in Form einer Mutter 37 gegen eine axiale Verschiebung des Riegels 39 versehen.

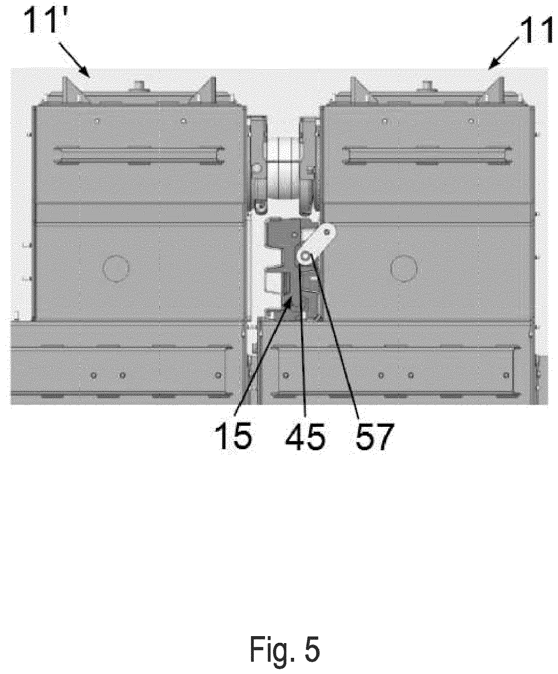

Das feststehende Profilteil 25 umfasst eine Querschnittsform 47 mit zwei Sicken 43, die eine unterschiedliche Breite aufweisen können und zur Versteifung des Profilteils 25 dienen. Zugleich bilden die Sicken 43 aber auch jeweils einen Durchlass 45 aus, durch welchen ein Funktionsbauteil 57 (Fig. 5) des Schaltfelds durch das Versteifungselement 15 hindurchgeführt werden kann. Gleiches gilt bei der gezeigten Ausführungsform für das verschiebbare Profilteil 31.

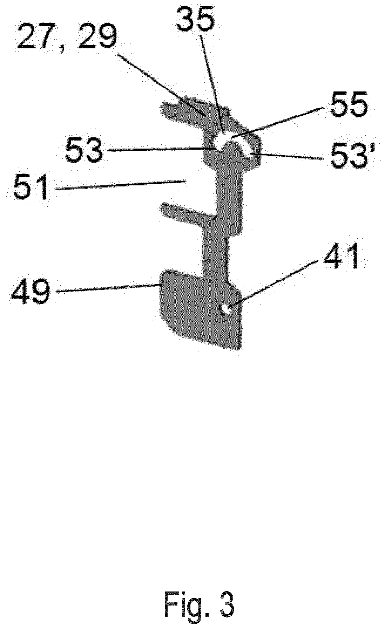

In Fig. 3 ist beispielhaft eine der Rippen 27, 29 mit der Kulissenführung 35 und der Öffnung 41 in einer Detailansicht gezeigt. Die Kulissenführung 35 umfasst einen Arretierabschnitt 53 und einen Arretierabschnitt 53', wobei der jeweilige Riegel 39 aus Fig. 2 und die jeweiligen Arretierabschnitte 53, 53' lösbar miteinander verrastbar sind. Ferner ist ein Teleskopierabschnitt 55 vorgesehen, der die Arretierabschnitte 53, 53' miteinander verbindet. Um die Arretierung zu lösen, können die verschiebbaren Rippen 29 beispielsweise von einem Monteur angehoben werden, sodass der jeweilige Riegel 39 aus den jeweiligen Arretierabschnitten 53, 53' gehoben wird, wodurch das Versteifungselement 15 teleskopiert werden kann.

Alternativ kann die Kulissenführung 35 beispielsweise eine U-förmige Aussparung aufweisen, die in der jeweiligen Rippe 27, 29 ausgebildet ist, wobei zwei parallele Abschnitte der Kulissenführung 35 einen ersten Arretierabschnitt 53 und einen zweiten Arretierabschnitt 53' ausbilden, die über einen Teleskopierabschnitt 55 miteinander verbunden sind. Diese Ausführung der Kulissenführung erlaubt eine besonders zuverlässige Versteifung, da die Wandung der Kulissenführung in den Arretierabschnitten 53, 53' senkrecht zu einer Krafteinleitung des Riegels 39 orientiert ist

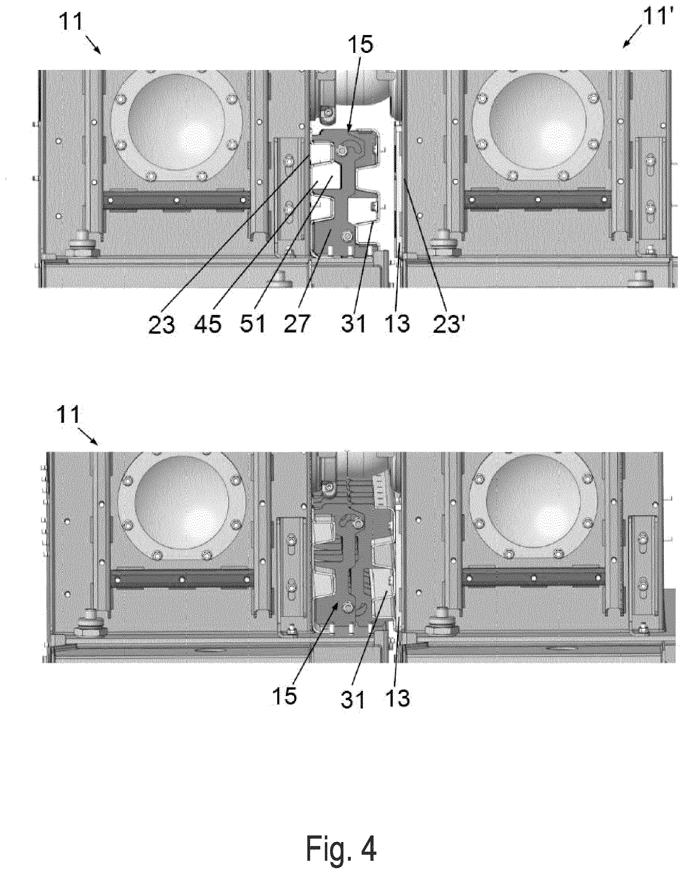

Die Rippe 27, 29 weist darüber hinaus eine Außenkontur 49 auf, die an die Querschnittsform 47 des Profilteils 25, 31 angepasst ist. Außerdem besitzt die Rippe 27, 29 eine Ausnehmung 51. Alle Rippen 27, 29 des Versteifungselements 15 sind gemäß Fig. 4 ausgebildet und weisen daher jeweils die Ausnehmung 51 auf, wodurch auch zwischen den feststehenden Rippen 27 und dem feststehenden Profilteil 25 ein Durchlass 45 (Fig. 2) ausgebildet ist.

In der oberen Darstellung von Fig. 4 ist eine Detailansicht eines Druckbehälters 11 neben einem benachbarten Druckbehälter 11' gezeigt, wobei das Versteifungselement 15 einteleskopiert und arretiert ist. Auch hier sind insbesondere ein Durchlass 45, der durch die Ausnehmungen 51 aller feststehenden Rippen 27 ausgebildet ist, ein verschiebbares Profilteil 31 und eine Montageplatte 13 vorgesehen, die an einer parallel zu der Außenseite 23 des Druckbehälters 11 beabstandeten und gegenüberliegenden Außenseite 23' des Druckbehälters 11' angeschweißt ist.

In der unteren Darstellung von Fig. 4 ist die Anordnung der oberen Darstellung von Fig. 4 mit austeleskopiertem Versteifungselement 15 gezeigt, wobei das Versteifungselement 15 arretiert ist und das verschiebbare Profilteil 31 an der Montageplatte 13 angeschraubt ist.

In Fig. 5 ist eine Detailansicht eines Druckbehälters 11 neben einem benachbarten Druckbehälter 11' dargestellt, wobei das Versteifungselement 15 einteleskopiert und arretiert ist. Auch hier ist insbesondere ein Durchlass 45 gebildet, durch welchen ein Funktionsbauteil 57 des Schaltfelds durch das Versteifungselement 15 hindurchgeführt ist.

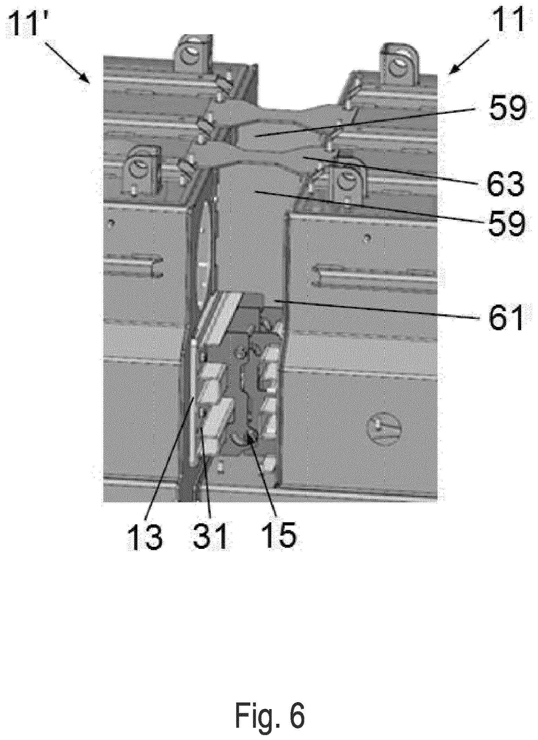

In Fig. 6 ist eine Detailansicht eines Druckbehälters 11 neben einem benachbarten Druckbehälter 11' dargestellt, wobei das Versteifungselement 15 austeleskopiert und arretiert ist. Ein verschiebbares Profilteil 31 des Versteifungselements 15 ist an einer Montageplatte 13 des Druckbehälters 11'angeschraubt. Zwischen den beiden Druckbehältern 11, 11' sind zwei Schwerter 59 eingeführt, die jeweils an beiden Druckbehältern 11, 11' anliegen. Dadurch können die Schwerter 59 einerseits als Abstandshalter dienen, wobei andererseits auch eine zusätzliche Versteifung durch die Schwerter 59 erreicht werden kann. Außerdem weist jedes Schwert 59 einen Eingriffsvorsprung 61 auf, der in das Versteifungselement 15 eingreift, wodurch jedes Schwert 59 das Versteifungselement 15 zusätzlich blockiert. Ferner besitzt jedes Schwert 59 eine Querplatte 63, über die das Schwert 59 mit den beiden Druckbehältern 11, 11' verschraubt ist.

### Bezugszeichenliste

- 11: Druckbehälter
- 11': zweiter Druckbehälter
- 13: Montageplatte
- 15: Versteifungselement
- 17: Sammelschienenraum
- 19: Leistungsschalterraum
- 21: Kabelanschlussraum
- 23: Außenseite
- 23': Außenseite
- 25: feststehendes Profilteil
- 27: feststehende Rippe
- 29: verschiebbare Rippe
- 31: verschiebbares Profilteil
- 33: Rippenpaar
- 35: Kulissenführung
- 37: Mutter
- 39: Riegel
- 41: Öffnung
- 43: Sicke
- 45: Durchlass
- 47: Querschnittsform
- 49: Außenkontur
- 51: Ausnehmung
- 53: Arretierabschnitt
- 53': Arretierabschnitt
- 55: Teleskopierabschnitt
- 57: Funktionsbauteil
- 59: Schwert
- 61: Eingriffsvorsprung
- 63: Querplatte

## Patentansprüche

1. Gasdichter Druckbehälter (11) für ein Schaltfeld der elektrischen Energietechnik, insbesondere der Mittelspannungstechnik, mit zumindest einem an einer Außenseite (23) des Druckbehälters (11) befestigten Versteifungselement (15), das senkrecht zu der Außenseite (23) teleskopierbar und arretierbar ausgebildet ist.

2. Druckbehälter (11) nach Anspruch 1,
**dadurch gekennzeichnet,**
**dass** das Versteifungselement (15) zumindest eine Kulissenführung (35) und zumindest einen Riegel (39) umfasst, der in der Kulissenführung (35) angeordnet ist.

3. Druckbehälter (11) nach Anspruch 2,
**dadurch gekennzeichnet,**
**dass** die Kulissenführung (35) einen Teleskopierabschnitt (55) sowie zumindest einen Arretierabschnitt (53) umfasst, wobei der Riegel (39) und der Arretierabschnitt (53) lösbar miteinander verrastbar sind,
insbesondere wobei die Kulissenführung (35) eine U-förmige Aussparung aufweist, wobei zwei parallele Abschnitte der Aussparung einen ersten Arretierabschnitt (53) und einen zweiten Arretierabschnitt (53') ausbilden, die über den Teleskopierabschnitt (55) miteinander verbunden sind.

4. Druckbehälter (11) nach einem der Ansprüche 2 oder 3,
**dadurch gekennzeichnet,**
**dass** die Kulissenführung (35) in einer zu der Außenseite (23) senkrechten Ebene ausgebildet ist, wobei der Riegel (39) parallel zu der Außenseite (23) in der Kulissenführung (35) angeordnet ist.

5. Druckbehälter (11) nach einem der vorhergehenden Ansprüche,
**dadurch gekennzeichnet,**
**dass** das Versteifungselement (15) mehrere parallel zueinander beabstandete Rippenpaare (33) umfasst.

6. Druckbehälter (11) nach Anspruch 5,
**dadurch gekennzeichnet,**
**dass** jedes Rippenpaar (33) zumindest eine feststehende Rippe (27) umfasst, die senkrecht zu der Außenseite (23) orientiert und an dieser befestigt ist, sowie zumindest eine relativ zu der feststehenden Rippe (27) verschiebbare Rippe (29), die insbesondere an der feststehenden Rippe (27) anliegt.

7. Druckbehälter (11) nach einem der vorhergehenden Ansprüche,
**dadurch gekennzeichnet,**
**dass** zumindest eine Rippe des Versteifungselements (15) eine Kulissenführung (35) aufweist, in der ein Riegel (39) angeordnet ist, und/oder
**dass** zumindest eine Rippe des Versteifungselements (15) eine Öffnung (41) aufweist, in der ein Riegel (39) formschlüssig und/oder kraftschlüssig aufgenommen ist.

8. Druckbehälter (11) nach einem der Ansprüche 5 bis 7,
**dadurch gekennzeichnet,**
**dass** zumindest eine feststehende Rippe (27) zumindest eines Rippenpaares (33) eine Kulissenführung (35) aufweist, in der ein Riegel (39) angeordnet ist, wobei zumindest eine verschiebbare Rippe (29) des Rippenpaares (33) eine Öffnung (41) aufweist, in der der Riegel (39) formschlüssig und/oder kraftschlüssig aufgenommen ist.

9. Druckbehälter (11) nach einem der Ansprüche 5 bis 8,
**dadurch gekennzeichnet,**
**dass** zumindest eine verschiebbare Rippe (29) zumindest eines Rippenpaares (33) eine Kulissenführung (35) aufweist, in der ein Riegel (39) angeordnet ist, wobei zumindest eine feststehende Rippe (27) des Rippenpaares (33) eine Öffnung (41) aufweist, in der der Riegel (39) formschlüssig und/oder kraftschlüssig aufgenommen ist.

10. Druckbehälter (11) nach einem der Ansprüche 6 bis 9,
**dadurch gekennzeichnet,**
**dass** das Versteifungselement (15) ein feststehendes Profilteil (25) mit zumindest einer Sicke (43) umfasst, das an der Außenseite (23) befestigt ist und an dem die feststehenden Rippen (27) befestigt sind, wobei die Außenkonturen (49) der feststehenden Rippen (27) an die Querschnittsform (47) des feststehenden Profilteils (25) angepasst sind.

11. Druckbehälter (11) nach Anspruch 10,
**dadurch gekennzeichnet,**
**dass** zwischen dem feststehenden Profilteil (25) und der Außenseite (23) und/oder zwischen dem feststehenden Profilteil (25) und allen feststehenden Rippen (27) zumindest ein Durchlass (45) ausgebildet ist, der dazu vorgesehen ist, ein Funktionsbauteil (57) des Schaltfelds durch den Durchlass (45) des Versteifungselements (15) hindurchführen zu können.

12. Druckbehälter (11) nach einem der Ansprüche 6 bis 11,
**dadurch gekennzeichnet,**
**dass** das Versteifungselement (15) ein verschiebbares Profilteil (31) mit zumindest einer Sicke (43) umfasst, das an den verschiebbaren Rippen (29) befestigt ist, wobei die Außenkonturen (49) der verschiebbaren Rippen (29) an die Querschnittsform (47) des verschiebbaren Profilteils (31) angepasst sind.

13. Druckbehälter (11) nach einem der Ansprüche 2 bis 12,
**dadurch gekennzeichnet,**
**dass** der Riegel (39) als Stange oder Bolzen ausgeführt ist, der sich in einer axialen Richtung erstreckt, wobei die Enden des Riegels (39) jeweils mit einer Sicherungseinrichtung, insbesondere einer Mutter (37) und/oder einem Splint versehen sind, wodurch der Riegel (39) gegen eine axiale Bewegung gesichert ist.

14. Druckbehälter (11) nach einem der vorstehenden Ansprüche,
**dadurch gekennzeichnet,**
**dass** das Versteifungselement (15) zumindest drei Bauteilsätze mit verschiedenen Bauteilen umfasst, wobei jeder der drei Bauteilsätze zumindest zwei gleiche Bauteile, insbesondere mit identischer Form, enthält.

15. Schaltfeld der elektrischen Energietechnik, insbesondere der Mittelspannungstechnik, mit einem Druckbehälter (11) nach einem der Ansprüche 1 bis 14.

16. Verfahren zur Versteifung eines Druckbehälters (11) nach einem der Ansprüche 1 bis 14, der in einem Schaltfeld angeordnet ist, wobei das Schaltfeld parallel beabstandet zu einem benachbarten zweiten Schaltfeld mit einem zweiten Druckbehälter (11') angeordnet ist, umfassend die folgenden Schritte:
Überführen des Versteifungselements (15) in den austeleskopierten Zustand,
Arretieren des Versteifungselements (15), und
Befestigen des Versteifungselements (15) an dem zweiten Druckbehälter (11').
